# EUROPEAN PATENT SPECIFICATION

(11) **EP 1 556 313 B1**
(45) Date of publication and mention of the grant of the patent: **13.12.2006**
(21) Application number: 03777575.6
(22) Date of filing: 09.10.2003
(51) Int. Cl.: C04B 28/14, C04B 24/08, E04C 2/04

(54) **AN ADDITIVE TO RENDER GYPSUM BOARD MOISTURE RESISTANT**
ZUSATZSTOFF ZUM FEUCHTIGKEITSBESTÄNDIGMACHEN EINER GIPSPLATTE
ADDITIF RENDANT DES PLAQUES DE PLATRE RESISTANTES A L'HUMIDITE

(30) Priority: 10.10.2002 US 417620
(43) Date of publication of application: 27.07.2005
(73) Proprietor: HRD Corp, Houston, TX 77245 (US)
(72) Inventor: HASSAN, Aziz, Sugarland, TX 77478 (US); BORSINGER, Gregory, Chatham, NJ 07928 (US)
(74) Representative: Knoblauch, Andreas
(86) International application number: PCT/US2003/032391
(87) International publication number: WO 2004/033388

(56) References cited:
- WO-A-98/09925
- US-A- 3 563 786
- US-A- 3 935 021
- US-A- 4 350 736
- US-A- 5 120 355
- US-A- 5 968 237

## Description

### CROSS-REFERENCES TO RELATED APPLICATIONS.

This application claims the benefit of United States Provisional Patent Application, Ser. No. 60/417,620, filed 10 October 2002.

### FIELD OF THE INVENTION

The present invention relates to an additive to improve the water-resistance of gypsum-based structural panels, such as those be used in industrial, commercial or residential applications where water and humid conditions are encountered. The additive is a vegetable wax comprising triglycerides. The additive can be converted into an emulsion or dispersion, or alternatively, it can be added as a solid powder to the gypsum, during the manufacture of the gypsum-based panel. The present invention is used as an additive in gypsum containing materials, either by itself or as part of a composition, to render the gypsum more water resistant.

### BACKGROUND OF THE INVENTION

This invention generally relates to a method of producing a gypsum plaster board (i.e. also known as drywall) formed of a gypsum core member covered with porous sheet members such as paper boards, which are bonded on both surfaces of the gypsum core member. More particularly, the present invention relates to a method of improving the water-resistance of the gypsum piaster board through the use of a vegetable-based triglyceride wax that may be applied after the wax has been converted into a water based emulsion or dispersion, or alternatively, by its application as a dry powder added to the gypsum board during its manufacturing process. The moisture resistant gypsum board has utility in numerous industrial, commercial and residential applications where high moisture or humidity is present, such as in bathrooms, kitchens, laundry rooms, utility rooms or basement areas. Moisture resistant gypsum board is commonly used in those environments where ceramic tile is placed over the gypsum board. Having a moisture resistant gypsum board also may provide a means for reducing the growth of organisms on the surface of the gypsum board, because many of these organisms, such as fungi (mold) require minute amounts of water in order to grow.

Panels of gypsum wallboard which comprise a core of gypsum sandwiched between two sheets of facing paper have long been used as structural members in the fabrication of buildings. The panels are attached to supports and used to form the partitions or walls of rooms, elevator shafts, stair wells or ceilings. A specialty application for the use of gypsum wallboard panels, as well as other types of building panels, is their use in bathrooms, which are typically places of high humidity and having residual water, because of the flow of water from the use of showers, bathtubs or sinks.

Gypsum wallboard panels are generally made by positioning a slurry of gypsum between fibrous liners, generally a paper, applying pressure to the gypsum/liner sandwich to produce a given thickness, allowing the product to set and harden before being cut into panels of specific lengths and widths, and then drying the product to remove excess moisture. Other additives, depending upon the properties desired in the final product, are generally added to the slurry before it is positioned between the fibrous liners.

Ordinary gypsum wallboard, gypsum tile, gypsum block or gypsum casts have relatively little resistance to water. When ordinary gypsum wallboard, for example, is immersed in water the board quickly absorbs a considerable amount of water, and loses a great deal of its strength.

Many attempts have been made in the past to improve the water resistance of gypsum products. A review of prior art indicates there are two major groups of additives which can be added to or mixed with gypsum preparations to render them water resistant or water repellant or waterproof, depending upon the terminology used by the various inventors.

These attempts have included the incorporation of water-resistant material such as metallic soaps, asphalts, waxes, resins, etc., within the gypsum (i.e., calcium sulfate hemihydrate) slurry during the manufacturing process. They have also included attempts to coat the finished gypsum product with water resistant films or coatings.

One class is that of emulsions, which generally comprise a wax emulsified with other agents, such as described in U.S. Pat. Nos. 6,585,820 B2 (Wantling et al., one or more waxes, primarily a hard paraffin); U.S. Pat. No. 6,010,596 (Song, paraffins and montan wax); U.S. Pat. 5,695,553 (Claret et al., paraffins and montan wax); U.S. Pat. No. 5,437,722 (paraffin wax-asphalt); U.S. Pat. No. 5,397,631 (Green et al., wax-asphalt); U.S. Pat. No. 5,120,355 (Imai, paraffin wax); U.S. Pat. No. 4,140,536 (Maier et al.,) and Published Patent Application 2003/0131763A1 (Wantling et al.). The waxes are generally petroleum based waxes, such as paraffins, microcrystalline waxes, montan wax, or wax-asphalt, wax-pitch mixtures.

The other, very general class is "other agents", which range from sulfur, calcium stearate, polyurethanes, siloxines and high molecular weight silicones, alkyl siliconates, or polyvinyl compounds, which can be added to or coated onto gypsum preparations. A reference (U.S. Pat. No. 3,009,820 to Gould) claiming a fatty acid mixture as a waterproofing agent did not define the fatty acids present in the tall oil used as the waterproofing agent.

In U.S. Pat. No. 6,585,820 B2 Wantling et al. disclose water resistant gypsum formulations consisting of an emulsion comprising a plurality of waxes, at least one saponified wax, a complexed starch, a polymerized alkyl phenol, and a co-surfactant, or an emulsion comprising a single wax, a dual surfactant system, a complexed starch, and a polymerized alkyl phenol. The waxes have a melting point of between 49 - 66 degrees C (120-150 degrees F) and are at least C₃₆ or greater. The main wax used in these emulsions is a hard paraffin wax.

Sethuraman et al. (U.S. Pat. No. 6,525,116 B2) discloses gypsum compositions with an ionic styrene butadiene latex additive for decreasing the weight of gypsum board.

U.S. Pat. No. 6,010,396 (Song) discloses an aqueous wax emulsion including a cationic surfactant which when added to a slurry of gypsum, or of gypsum and wood fibers, yields products having enhanced water resistance. The preferred wax for these emulsions is one of several paraffins, all with melting points in the range of 40 - 80 degrees C, or montan wax.

In U.S. Pat. No. 5,702,828 Adler et al. disclose a process for waterproofing gypsum materials, comprising adding a mixture of vinyl acetate copolymers with ethylene and/or vinyl esters of C₅-C₁₅-monocarboxylic acids, styrene copolymers with acrylic esters of alcohols having from 1-18 carbon atoms, vinyl chloride copolymers with ethylene and/or vinyl esters of C₂-C₁₅ monocarboxylic acids, and one or more thixotropic additives to the gypsum base. The additive is added to the dried gypsum, and water required for processing is added at the building site prior to processing.

Claret et al. (U.S. Pat. No. 5,695,553) discloses wax-based emulsions for treating gypsum products to render them water resistant. The emulsion comprises paraffin waxes and montan wax in an aqueous emulsion, which is added to make a gypsum board core that is water resistant.

Stav et al. (U.S. Pat. No. 5,685,903) discloses the use of a pozzolanic aggregate, such as pumice, added to gypsum preparations to render them water resistant and which do not require kiln drying. A variety of water resistant construction materials can be prepared, such as floor underlayments, backing boards, self-leveling floor materials, and road patching materials.

In U.S. Pat. No. 5,437,722 Borenstein discloses compositions including an aqueous emulsion containing a paraffinic hydrocarbon having a melting point of between 40- 80 degrees C, montan wax and a polyvinyl alcohol for rendering gypsum compositions water-resistant. Borenstein discusses the pitfalls of wax-asphalt emulsions, such as their tendency to separate on storage, difficulties in re-emulsifying the separated emulsions, black stains appearing on the finished product, and inconsistent efficiencies in waterproofing gypsum products.

U.S. Pat. No. 5,397,631 (Green et al.) discloses use of a wax-asphalt emulsion in combination with a polyvinyl alcohol as additives to render a gypsum wallboard core water resistant. After the gypsum core has been formed, it is coated with a resin which is preferably applied in two or more coats.

Beshay (U.S. Pat. No. 5,264,028) discloses modification of waxes with a coupling agent selected from the group consisting of zirconates, titanates, alumino-zirconates, silanes and isocyanates, by a free radical grafting process, which can be used as surface coatings to render a variety of products, including gypsum board water resistant. Among the variety of waxes potentially useful for this invention are carnauba and sugarcane, paraffins and microcrystalline waxes.

In U.S. Pat. No. 5,120,355 Imai discloses an aqueous emulsion comprising a wax having a melting point between 50 - 90 degrees C, preferably between 50-85 degrees C, a hydrocarbon resin, an alkali metal salt of a condensation product of beta-naphthalene sulfonic acid with formalin and an alkali salt of polyacrylic acid. Paraffin wax is the only wax used in the Examples.

Sellers et al. (U.S. Pat. No. 5,135,805) discloses a method of manufacturing a water resistant gypsum composition by incorporation of a polysiloxane (DOW CORNING 1107 FLUID, a gypsum grade poly(methylhydrogen siloxane)) into the gypsum formulation.

Water resistant wallboard is disclosed in U.S. Pat. No. 5,814,411 (Merrifield et al.)., wherein a high molecular weight (between 75,000 - 200,000) molecular weight silicone is used in conjunction with a hydrogen silicone fluid, to form sheets of water repellant wallboard.

U.S. Pat. No. 5,344,490 (Rooaen et al.) discloses use of polyurethane to plasticize gypsum for use in wallboard and other applications. Included in the polyurethane mixture is a polyol, such as castor oil.

In U.S. Pat. No. 5,098,943 Tagawa et al. disclose an aqueous emulsion effective as a water repellant for gypsum comprising a wax having a melting point of from 40-80 degrees C, a styrene-maleic anhydride copolymer; a water-soluble alkaline component; and a polyvinyl alcohol having a saponification degree of at least 85 mol. %. The preferred wax is a paraffin wax.

Deleuil (U.S. Pat. No. 4,221,599) discloses a waterproofing agent for gypsum, or plaster or combinations thereof comprising an essentially water-insoluble metallic salt of an organic fatty acid. The preferred agent is calcium stearate, added in amounts of from 0.2 to 2% by weight of the mixture. A variety of water repellant articles can be produced, for example, load-bearing elements such as walls, facing panels or flooring elements.

In U.S. Pat. No. 4,411,702 Makino et al. disclose addition of a hydrophobic diorganopolysiloxane fluid, preferably dimethylpolysiloxane fluid, having a kinetic viscosity of 10- 10,000 CS at 25 degrees to render sheets of gypsum water repellant and able to be used suitably in both interior and outdoor construction materials.

Saito et al. (U.S. Pat. No. 4,411,701) disclose using alkaline metal alkylsiliconates or phenylsiliconates together with calcium hydroxide or calcium oxide to render molded gypsum products waterproof.

In U.S. Pat. No. 4,140,536 Maier et al. disclose the use of a mixture of pitch and wax, such as a paraffin wax or a microcrystalline wax, in a 15:1 ratio of pitch:wax, added to a gypsum slurry, which when molded, set and kiln dried, produces a waterproof gypsum product.

Sugahara et al. (U.S. Pat. No. 4,126,599) discloses using a water-insoluble or hardly water-soluble salt of a polybasic acid, such as oxalic, phosphoric or hexafluorosilicic acids to render gypsum water resistant. The gypsum products can be in the form of a wall material, a tile, a ceiling material, floor material, sheet, block, brick or paving stone.

In U.S. Pat. No. 4,094,694 Long discloses addition of polyvinyl alcohol and borate to wax-asphalt emulsions to render gypsum products water resistant. The wax used in these emulsions is a crude scale wax or paraffin.

Terada et al. (U.S. Pat. No. 4,042,409) disclose a water repellant gypsum composition comprising a gypsum, a paraffin emulsion including a paraffin hydrocarbon with a melting point of between 40-80 degrees C, an oxidized paraffin having an acid value of 10-70 at a ratio of from 97:3 to 50:50 by weight, respectively, in the presence of a water soluble alkali compound.

Greve et al. (U.S. Pat. No. 3,935,021) discloses a wax-asphalt emulsion, using either paraffin wax or microcrystalline wax, in conjunction with a polyvinyl alcohol to render gypsum board, such as wallboard, water resistant. The total amount of wax and asphalt in the aqueous emulsion will generally comprise about 50 to about 60 wt. % of the aqueous emulsion; the emulsion can be added directly to the gypsum slurry.

In U.S. Pat. No. 3,009,820 Gould describes a sizing composition for the gypsum core of wallboard, comprising an emulsion including a hydrocarbon wax and tall oil pitch. The hydrocarbon wax is chosen from crude scale paraffin wax, slack wax, petrolatum, fully refined paraffin wax or microcrystalline wax. The tall oil is reported to contain free fatty acids, but they are not described further.

In U.S. Pat. No. 2,804,411 Riddell et al. disclose the use of an aqueous emulsion comprising a microcrystalline wax to render gypsum water resistant.

Haydon (U.S. Pat. No. 2,082,887 discloses the use of between 0.05-0.2% fatty acid, such as oleic, stearic and ricinoleic acids and their mixtures, either in alcoholic solution or emulsions in uncalcined gypsum as part of a method of making gypsum wall plaster. The inventor notes that these agents enable the material to be slightly water repellant.

Emerson (U.S. Pat. No. 1,470,260) describes coating a sheet of wallboard with sulfur to render it water resistant.

Nelson et al. (U.S. Patent Application Publication No.: 2003/0022000 A1) disclose using polymeric diphenylmethane diisocyanate ("pMDI") as a coating to render gypsum board water resistant.

An example of an attempt to waterproof gypsum integrally by the addition of water-repellent substances is disclosed in U.S. Pat. No. 2,198,776 (King et al.) describing the incorporation of paraffin wax into the aqueous slurry by spraying the molten wax into the gypsum slurry. Greve et al. (U.S. Pat. No. 3,935,021) disclose using the combination of a polyvinyl alcohol and a wax-asphalt emulsion to improve the water resistance of gypsum products such as wallboard.

Although improvements have been realized by the provision of gypsum wallboard faced with a water-resistant paper (using an agent such as an alkaline succinic anhydride) and having an improved water-resistant core, such improvements have not been accepted as an entirely satisfactory solution to the problem. The presence of moisture causes the paper facing of the wallboard to delaminate over time. In such situations, tiles mounted on such treated wallboard come loose from their backing as the paper facing delaminates and the gypsum core erodes through the degrading action of moisture. The problem is particularly aggravated by warm water acting upon a gypsum core that includes wax-asphalt emulsion, one of the most popularly used additives to render gypsum cores water-resistant. While cores containing such material have quite good water-resistance characteristics in the presence of water at room temperature, such characteristics start to fall off as the temperature is increased, with the water-resistance characteristics tending to disappear in the presence of water having a temperature of about 37.8 degrees C (100 degrees F) or higher.

Petroleum waxes such as paraffin and microcrystalline wax are used extensively by themselves and in combination with asphalt emulsions, montan wax, polyvinyl alcohol polymers, and other hydrophobic materials, to impart moisture resistance to gypsum boards to render them more water resistant, as revealed by the prior art. Other waxes, for example, synthetic waxes such as Fischer Tropsch ("FT"), and polyethylene waxes have also been used for this purpose with mixed results.

Prior to the present invention, waxes used to render gypsum board moisture resistant needed to be converted to emulsions; such waxes could not be converted to a powder economically. A powder form of wax is desirable for use in manufacturing moisture resistant gypsum board because most of the components used today in the manufacture of gypsum are handled as dry powders prior to their being mixed at the point of injection onto the paper stock. Waxes presently used in manufacturing water resistant gypsum have relatively low melting points and are soft due to the broad range of molecular weight components in their composition. This combination of a low melting temperature and broad molecular weight distribution results in a wax that will melt if ground in a commonly used size reduction machine such as a hammer mill. Cooling while grinding, either through mechanical or cryogenic means is possible, but the resulting significant increase in processing costs makes the technique impractical.

An alternative to reduce a low melting point paraffin to a powder form is to spray atomize the wax through high-pressure nozzles. Paraffins with melting points below about 71.2 degrees C (160 degrees F) are not spray atomized due to their tendency for the powder to 'block' or adhere to one another under normal storage and temperature conditions. Higher melting point paraffin and other higher melting point waxes that might be suitable for atomization are too costly to be used in gypsum manufacturing. The waxes of the present invention are unique in that they have a relatively narrow molecular weight distribution and are relatively hard when compared to the low melting point paraffin that is typically used in emulsion manufacture for gypsum application. The result is that the vegetable derived waxes of the present invention can be economically converted into powder form, either mechanically or through spray atomization. These vegetable derived waxes also do not have the same tendency to 'block' as low melting point paraffin and are therefore suitable and economical for use as a powder in the manufacture of moisture resistant gypsum and gypsum products.

The waxes of the present invention can also be readily converted into emulsions or dispersions for incorporation into water resistant gypsum and gypsum products. This may be desirable, such as in a manufacturing facility where equipment already exists for this purpose. The waxes of the present invention are highly functional having a saponification value of approximately 180-mgKOH/g (See Tables 4-5). The high saponification value allows for conversion of the wax into emulsion or dispersion form, in contrast to petroleum and/or asphalt wax which first is often oxidized to render the molecule functional in order to facilitate emulsification or dispersion. Because the waxes of the present invention do not require such processing, this also renders the present invention more economical than petroleum derived waxes.

Large oil companies such as Shell Oil, ExxonMobil and other oil refiners supply petroleum waxes used in these applications. Most of this wax is derived in the process of refining lube oil where the wax is separated from the lube oil stock and refined into various fractions of wax including paraffins, and microcrystalline waxes. These waxes are presently being used in the manufacture of gypsum and gypsum board. Low cost waxes such as paraffin and low oil content slack wax are typically converted into a water-based form by being combined with a surfactant and either emulsifying or homogenizing the wax.

In addition to waxes, asphalt and soaps, various other additives have been tried to improve the moisture resistance of gypsum board. For example, Englert (U.S. Pat. No 5,817,262) discloses making a gypsum board having improved water resistance through the addition of an aqueous siloxane emulsion to an aqueous slurry of a calcium sulfate material and host particles (any macroscopic particle, such as a fiber, a chip or a flake, of a substance other than gypsum).

The present invention is a natural wax for use as an additive for the manufacture of gypsum board to render it moisture resistant. The product is a commercially available high triglyceride wax derived from the processing of natural oil containing commodities such as soybeans, palm and other crops from which oil can be obtained. The materials are processed and supplied by Archer Daniels Midland (Decatur III.) designated by their product number 86-197-0, Cargill Incorporated (Wayzata, Mn) designated by their product number 800mrcs0000u and other sources under a generic name 'hydrogenated soybean oil'. This product is sold by the assignee of the present invention, Marcus Oil and Chemical Corp., Houston, TX, as Marcus Nat Wax 155. Palm oil wax was supplied by Custom Shortenings & Oils (Richmond, Va) and was designated as their product Master Chef Stable Flake-P. The present invention also contemplates using the hydrogenated vegetable oil waxes in combination with waxes derived from other sources, such as montan wax, or in combination with other hydrophobic materials such as asphalt and polyvinyl alcohol in order to reduce cost, or to act in synergy with the vegetable oil wax to help render gypsum products and gypsum boards moisture resistant.

### BRIEF SUMMARY OF THE INVENTION

An objective of the present invention is to provide a gypsum board product having improved water and moisture resistance, the product being formed by combining gypsum with a wax, with the wax being dispersed throughout the board.

Another objective of the present invention is to provide a wallboard that is more water resistant, i.e. it maintains its strength even on exposure to water; and which can be produced at a practical cost.

Still another object of the present invention is to provide a water resistant wallboard which can be derived from a renewable resource in place of non-renewable petroleum based compositions.

Another object of the present invention is to provide a means of incorporating the vegetable derived wax into a water-based emulsion.

Another object of the present invention is to provide a means of incorporating the vegetable derived wax as a powder which is incorporated with other dry ingredients of wallboard prior to forming the slurry used in the wallboard manufacturing process.

Still another object of the present invention is to provide a renewable source of moisture resistant wax, which can be economically produced.

The present inventors have recently demonstrated that waxes prepared from hydrogenated plant oils, such as palm and soybean, can be used to render cellulosic materials, such as kraft paper or boxboard, resistant to water. The compositions have a low iodine value (between 2-5), and melting points between approximately 48.9 - 73.9 degrees C (120 -165 degrees F) (Mettler Drop Point). The wax comprises a triglyceride whose fatty acids are predominantly stearic acid (C₁₈). The composition is used as an additive in the manufacture of wax coated boxes and adhesive compounds used in boxboard packaging and manufacturing operations.

The present inventors have also unexpectedly discovered that highly hydrogenated oils such as soybean and palm can be used effectively as substitutes for conventional petroleum and synthetic waxes in the manufacture of water resistant wallboard.

The main objectives of the present invention are realized by adding a vegetable derived wax emulsion or powdered vegetable wax to a gypsum preparation, such as calcined gypsum (calcium sulfate hemihydrate), making a slurry by the addition of water and other ingredients that may include for example, those included conventionally in the manufacture of gypsum sheathing. Examples of such ingredients include set accelerators, retarders, foaming agents, reinforcing fibers, and dispersing agents, and are generally known to those skilled in the art. The resulting slurry is mixed and deposited between two fibrous mats, such as paper, which are sufficiently porous to permit water in the aqueous gypsum slurry from which the gypsum core is made to evaporate therethrough. Pressure is applied to the mat until the mat reaches a desired thickness. Aided by heating, excess water evaporates through the porous mat after the calcined gypsum sets. As the gypsum hydrates or sets, it forms calcium sulfate dihydrate (CaSO₄2H₂O), a relatively hard material, and forms crystalline structures that build strength and allow for drying and a dimensionally stable, water resistant, wallboard to be manufactured. The core of the gypsum wallboard product will in general comprise at least about 85 weight percent ("wt. %") of set gypsum. As will be described in more detail below, a preferred gypsum core includes one or more additives which improve its water-resistance properties.

The present invention relates to an additive comprising highly hydrogenated vegetable oil (soybean, palm and corn) that has wax-like properties and can be incorporated into wallboard through conventional means. The hydrogenated oils that can be used are > 90% triglyceride and have fatty acids with a range of carbon numbers with C₁₈ (stearic acid) being the most predominant component (> 50%).

### BRIEF DESCRIPTION OF THE SEVERAL VIEWS OF THE DRAWING

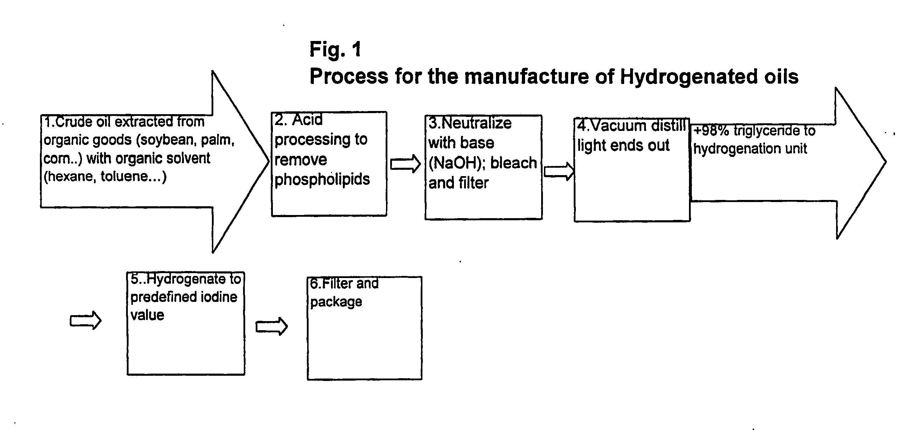

Fig. 1 is a flow chart illustrating a process for the manufacture of hydrogenated oils.
Fig. 2 compares the water absorption of gypsum prepared with a vegetable wax to that of gypsum prepared using a paraffin wax.

### DETAILED DESCRIPTION OF THE INVENTION

The term "gypsum" will be used to refer to both calcium sulfate in the stable dihydrate state; i.e. CaSO₄·2H₂O, and includes the naturally occurring mineral, the synthetically derived equivalents, and the dihydrate material formed by the hydration of calcium sulfate hemihydrate or anhydrite. Additionally, "gypsum" is meant to include other forms of calcium sulfate that occur during the process of gypsum product manufacturing, such as calcium sulfate anhydrite, calcium sulfate hemihydrate, calcium sulfate dihydrate, or mixtures thereof.

In the preparation of gypsum products, it is believed by those skilled in the art that gypsum, calcium sulfate dihydrate, upon heating at specific temperatures, becomes converted to a calcined gypsum, i.e., calcium sulfate hemihydrate. It is the calcined gypsum, the calcium sulfate hemihydrate, that is commonly used for the preparation of gypsum products, ranging from stucco to gypsum wallboard or other formed products. It is further believed that upon addition of water to the calcium sulfate hemihydrate, the calcium sulfate becomes rehydrated towards the dihydrate form, and this is accompanied by a rearrangement of the crystalline structure to produce a product, that when it is dry, can form a rigid structure. Temperatures of between 100 degrees C to 200 degrees C are commonly used to convert calcium sulfate dihydrate to the hemihydrate form, the temperature and time period often chosen based upon specific manufacturing concerns. For example, a shorter heating time at a slightly higher temperature may be used to speed up production, or a longer time at a lower temperature, for example, to minimize degradation of certain components.

Generally, the manufacture of gypsum products starts with pulverizing the crude gypsum, generally in the form of rocks, and then adding water to the gypsum to make a slurry. In addition to water, any one or more, or combinations thereof, of other ingredients may be added to the preparation. Examples of these other ingredients which are conventionally used in the manufacture of gypsum sheathing include set accelerators, retarders, foaming agents, reinforcing fibers, and dispersing agents, and which will be described further in greater detail. These other ingredients are usually added dry, but liquids may also be used. The preparations, after mixing, are generally heated at a high temperature for specific time periods, after which the resulting slurry is deposited between two fibrous mats, such as paper, which are sufficiently porous to permit water in the aqueous gypsum slurry to evaporate therethrough. The deposited preparation is then subjected to pressure, to produce a desired thickness. Aided by heating, excess water evaporates through the porous mat after the calcined gypsum sets. As the gypsum hydrates or sets, it forms calcium sulfate dihydrate (CaSO₄·2H₂O), a relatively hard material, and forms crystalline structures that build strength and allow for drying to produce a dimensionally stable wallboard. Generally, the core of the gypsum wallboard product will comprise at least about 85 weight percent ("wt. %") of set gypsum. As will be described in more detail below, gypsum cores produced using the present invention include one or more additives which improve its water-resistance properties.

Naturally occurring and synthetic waxes are extensively used in a wide cross-section of industries including the food preparation, pharmaceutical, cosmetic, and personal hygiene industries. The term wax is used to denote a broad class of organic ester and waxy compounds that span a variety of chemical structures and display a broad range of melting temperatures. Often the same compound may be referred to as either a "wax," "fat" or an "oil" depending on the ambient temperature, the chain lengths of the esterified fatty acids, and their degree of saturation or unsaturation. Generally, the greater the degree of saturation and the longer the chain length of the esterified acids, the higher will be the melting point of the triglyceride.

By whatever name it is called, the choice of a wax for a particular application is often determined by whether it is a liquid or solid at the temperature of the product with which it is to be used. Among the factors that determine whether a wax is liquid or solid at a given temperature are properties such as the degree of saturation or unsaturation of the components of the wax, primarily the fatty acids, and a property such as the iodine number, or iodine value ("IV"). The iodine value measures the amount of iodine absorbed in a given time by a compound or mixture, and the IV is thus a measure of the unsaturation, or the number of double bonds, of that compound or mixture. Generally, the greater the degree of saturation and the longer the chain length of the esterified fatty acids, the higher will be the melting point. Similarly, the lower the iodine value of the composition, the harder, and more solid it will be at a particular temperature

The term "triglycerides" will refer to fatty acid esters of glycerol. Within the context of the present specification, the term "free fatty acid" will refer to a fatty acid that is not covalently bound through an ester linkage to glycerol; the term "fatty acid component" will be used to describe a fatty acid that is covalently bound through an ester linkage to glycerol.

Waxes can be obtained from a number of natural sources, among which are petroleum products and extracts of plants. Petroleum, and plant extracts are complex mixtures, and purification steps are often required to obtain waxes from them. Frequently it is necessary to extensively purify and chemically modify a wax to make it useful for a given purpose. Despite such efforts at modification, many physical characteristics of the waxes inherent in their structure still prevent them from being used successfully or demand that extensive additional treatments be undertaken.

Paraffin waxes, for example, comprising different types of hydrocarbons, are obtained from petroleum distillation. Medium paraffin wax is composed primarily of straight chain hydrocarbons having carbon chain lengths ranging from about 20 to about 40, with the remainder typically comprising isoalkanes and cycloalkanes. The melting point of medium paraffin wax is about 50 degrees C to about 65 degrees C.

Microcrystalline paraffin wax is composed of branched and cyclic hydrocarbons having carbon chain lengths of about 30 to about 100 and the melting point of the wax is about 75 degrees C to about 85 degrees C. Further descriptions of petroleum waxes may be found in Kirk-Othmer, Encyclopedia of Chemical Technology, 3rd Edition, Volume 24, pages 473-76.

Further, extensive commercial use has been made of the naturally occurring carboxylic acids ("fatty acids") and their derivatives, most commonly the glyceryl derivatives in which all three hydroxy groups of the glycerol molecule are esterified with a carboxylic acid. The carboxylic acids may be saturated or unsaturated. The tri-substituted glycerols (triglycerides) are major components of most animal and plant fats, oils and waxes. When all three hydroxy groups of a glycerol molecule have been esterified with the same fatty acid, it is referred to as a monoacid triglyceride.

Triglycerides and free fatty acids can be obtained preferably from plant sources, including soybean, cottonseed, corn, sunflower, canola and palm oils. The triglycerides are used after normal refining processing by methods known in the art. For example, plant triglycerides may be obtained by solvent extraction of plant biomass using aliphatic solvents. Subsequent additional purification may involve distillation, fractional crystallization, degumming, bleaching and steam stripping. The triglycerides obtained are partially or fully hydrogenated. Furthermore, fatty acids may be obtained by hydrolysis of natural triglycerides (e.g., alkaline hydrolysis followed by purification methods known in the art, including distillation and steam stripping) or by synthesis from petrochemical fatty alcohols. The free fatty acids and triglycerides may further be obtained from commercial sources, including Cargill, Archer Daniels Midlands and Central Soya.

In a prior U.S. patent application, we have described the use of saturated soy and palm oil waxes in compositions to render paper products water resistant yet recyclable; such paper products included kraft paper used in cartons for shipping food products. The free fatty acids and fatty acid components of the triglycerides were preferably saturated, but could also be unsaturated as long as the final coating composition was a solid at the temperature at which the coating is used. These waxes are also considered to be generally regarded as safe by the U.S. Food and Drug Administration.

Vegetable oils or animal fats can be synthetically hydrogenated, using methods known to those skilled in the art, to have low or very low iodine values. Saturated triglycerides having a low iodine value (a range of iodine values of about 0-70 with 0-30 preferred) may be produced by hydrogenation of commercial oils, such as oils of soybean, soy stearine, stearine, corn, cottonseed, rape, canola, sunflower, palm, palm kernel, coconut, crambe, linseed, peanut, fish and tall oil; or fats, such as animal fats, including lard and tallow, and blends thereof. These oils may also be produced from genetically engineered plants to obtain low IV oil with a high percentage of fatty acids.

Waxes obtained from animal fats could be used in the present invention, using winterization as a source for lower IV fats. This process, commonly used to fractionate fats, involves chilling the mixture for a period of time long enough to allow the harder fractions of the fats to crystallize. Chilling is followed by filtration, with the harder fractions being retained on a filter cake. These harder fractions have a lower iodine value and, therefore, a melting point that is higher than the melting point of the fat from which it has been separated.

Additional waxes that could be employed, and which are derived from a variety of sources, include waxes such as carnauba, montan wax, castor bean, sugar cane wax, candelilla wax, cuticle, and bayberry, and animal-derived waxes such as beeswax, lanolin and shellac, among others.

The present invention performs best with a hydrogenated triglyceride where the iodine value is close to zero thereby rendering the triglyceride more thermally stable. The triglycerides can be chosen from those having an iodine value of between 0 - 30, but a triglyceride having an iodine value of between approximately 2 to approximately 5 is preferred.

In the present invention, the free fatty acids and fatty acid components of the triglycerides are preferably saturated. The properties of the free fatty acid/triglyceride mixture, such as melting point, will vary as a function of the chain length and degree of saturation of the free fatty acids and the fatty acid components of the triglycerides. For example, as the degree of saturation decreases, the melting point decreases. Similarly, as the chain length of the fatty acids decreases, the melting point decreases. Preferred free fatty acids are the saturated fatty acids such as palmitic acid and include saturated fatty acids of longer carbon chain length, such as arachidic acid and behenic acid. Stearic acid is further preferred.

Examples of materials which have been reported as being effective for improving the water-resistance properties of gypsum products include: polyvinyl alcohol, with or without a minor amount of poly(vinyl acetate); and metallic resinates.

Also used are wax or asphalt or mixtures thereof; these mixtures may also include a mixture of wax and/or asphalt with cornflower and potassium permanganate; wax-asphalt emulsions with or without such materials as potassium sulfate, alkali and alkaline earth aluminates, and Portland cement; a wax-asphalt emulsion prepared by adding to a blend of molten wax and asphalt an oil-soluble, water-dispersing emulsifying agent, and admixing the aforementioned with a solution of casein which contains, as a dispersing agent, an alkali sulfonate of a polyarylmethylene condensation product.

Other ingredients include water insoluble thermoplastic organic materials such as petroleum and natural asphalt, coal tar, and thermoplastic synthetic resins such as poly(vinyl acetate), poly(vinyl chloride) and a copolymer of vinyl acetate and vinyl chloride and acrylic resins; a mixture of metal rosin soap, a water soluble alkaline earth metal salt, and residual fuel oil; a mixture of petroleum wax in the form of an emulsion and either residual fuel oil, pine tar or coal tar; a mixture comprising residual fuel oil and rosin; aromatic isocyanates and diisocyanates; and organohydrogenpolysiloxanes.

Wax-asphalt emulsions, such as described above, have been used widely in improving the water-resistance properties of the gypsum core of wallboard. The wax portion of the emulsion comprises a paraffin or microcrystalline wax, but could also be another wax. The asphalt in general has a softening point of about 46.1 degrees C (115 degrees F), as determined by the ring and ball method. The total amount of wax and asphalt in the aqueous emulsion will generally comprise about 50 to about 60 wt. percent of the aqueous emulsion, with the weight ratio of asphalt to wax varying from about 1 to 1 to about 10 to 1. Various methods are known for preparing the wax-asphalt emulsion (U.S. Pat. No. 3,935,021 to D. R. Greve and E. D. O'Neill). Commercially available wax asphalt emulsions that can be used include United States Gypsum Co. Wax Emulsion; Monsey Products No. 52 Emulsion; Douglas Oil Co. Docal No. 1034; and Conoco No. 7131. The amount of wax-asphalt emulsion used can be within the range of about 3 to about 10 wt. %, preferably about 5 to about 7 wt. %, based on the total weight of the ingredients of the composition from which the set gypsum core is made, including the water present in the wax-asphalt emulsion, but not including additional amounts of water that are added to the gypsum composition for forming an aqueous slurry thereof.

The use of a mixture of materials, namely, polyvinyl alcohol and wax-asphalt emulsion of the aforementioned type to improve the water resistance of gypsum products is described in U.S. Pat. No. 3,935,021. The source of the polyvinyl alcohol is preferably a substantially completely hydrolyzed form of poly(vinyl acetate), that is, about 97 to 100% hydrolyzed polyvinyl acetate. The polyvinyl alcohol should be cold-water insoluble and soluble in water at elevated temperatures, for example, at temperatures of about 62 degrees C (140 degrees F) to about 96.2 degrees C (205 degrees F). In general, a 4 wt. % water solution of polyvinyl alcohol at 20 degrees C will have a viscosity of about 25 to 70 cp as determined by means of the Hoeppler falling ball method. Commercially available polyvinyl alcohols for use in the composition of the present invention are available from E.I. du Pont de Nemours and Company (Wilmington DE), sold under the trademark ELVANOL® and from Monsanto Co., sold under the trademark GELVATOL®. Examples of such products are ELVANOL®, Grades 71-30, 72-60, and 70-05, and GELVATOL®, Grades 1-90, 3-91, 1-60, and 3-60, also sold as WS-42 (Air Products Corp., Allentown; PA).

The amounts of polyvinyl alcohol and wax-asphalt emulsion used should be at least about 0.05 wt. % and about 2 wt. % respectively. The preferred amounts of polyvinyl alcohol and wax-asphalt emulsion are about 0.15 to about 0.4 wt. % and about 3 to about 5 wt. %, respectively.

Unless stated otherwise, the term weight percent ("wt. %") as used herein and in the claims means weight percent based on the total weight of the ingredients of the composition from which the set gypsum core is made.

Another additive which could be used in the core of a gypsum-based product to produce a water-resistant product is an organosiloxane polymer, for example, of the type referred to in U.S. Pat. Nos. 3,455,710; 3,623,895; 4,136,687; 4,447,498; and 4,643,771. The amount of the organosiloxane polymer should be at least about 0.2 wt. %. A preferred amount falls within the range of about 0.3 to about 0.6 wt. %.

In a preferred form, the core, of fibrous mat-faced gypsum board should have a density of about 640.74 to about 881.02 kg/m³ (40 to about 55 lbs/cu. ft.), most preferably about 736.85 - 800.92 kg/m³ (46 to about 50 lbs/cu. ft.). The manufacture of cores of specified densities can be effected using known techniques, such as, for example only, by the introduction of an appropriate amount of foam into the aqueous gypsum slurry from which the core is formed.

Additionally, a variety of other compounds can be added into an aqueous gypsum preparation Agents such as accelerators to control properties, within limits, such as the setting time of the composition, can be added. Such agents include potassium sulfate, ball mill accelerators, aluminum sulfate, calcium sulfate, ferric chloride and ferric sulfate, a tertiary amine such as dimethylethanolamine, an organometallic compound such as dibutyltindilaurate, and other compounds known to those skilled in the art. To further control the setting time of the compositions, retarding agents can be added; these agents, working in conjunction with the accelerators, affect the set time of the composition. Retardants are generally employed at low concentrations, such as between approximately 0.0005 wt. % to approximately 0.0010 wt %, based on the weight of the composition.

Starch, zeolites or other desiccating agents may be added, as well as aggregates or fillers such as sand, vermiculite, perlite, pumice, pozzolanic aggregates, or others known to those skilled in the art. Additional constituents may include dispersing agents, foaming agents, and reinforcing materials or fibers. Such fibers can include glass fibers, polyvinyl alcohol fibers, polyamide fibers, polyester fibers, polyolefin fibers, synthetic resin fibers, wood fibers, wood chips, or other cellulosic fibers. Antimicrobials and antifungal compounds, copper sulfate, and a variety of biocides, can also be added to prevent the growth of mold or other organisms or microorganisms.

Individual waxes were added to aqueous slurries of gypsum in the present invention. These waxes were added either as a dried powder, or in the form of an emulsion. However, it is possible to employ combinations of waxes in other embodiments. These combinations could employ one or more waxes, each one added as a dry powder where available, or as a liquid or emulsion, as appropriate to the wax, or combinations of the solid or liquid/emulsion. Such combinations could be a combination of soy and palm, soy and castor bean, or other vegetable waxes in combination with another kind of wax, such as the mineral derived waxes (for example, montan), the animal derived waxes; such as beeswax, or other vegetable derived waxes, such as castor bean, or with the natural or synthetic petroleum based waxes such as the paraffins, slack wax, microcrystalline or Fischer-Tropsch waxes.

The specific waxes employed in the present invention are a palm oil wax and a soybean wax, prepared from hydrogenated oil. The latter is designated as Marcus Nat 155, produced by Marcus Oil and Chemical Corp, Houston TX. These waxes can also be used as food additives

The properties of the two waxes are summarized in Tables 4 and 5, where it can be seen that these waxes have IV's of between 5 and 2, respectively.

The soybean oil wax has a melting point, as measured by Mettler Drop Point, of between 68.4 - 71.2 degrees C (155 - 160 degrees F), while that of the palm oil wax is between 57.8 - 61.2 degrees C (136 - 142 degrees F). These waxes are further characterized by having a viscosity of between 10-11 cP (60-65 SUS) at a temperature of 99.9 degrees C (210 degrees F).

Each wax comprises 98 % triglyceride by weight with trace amounts of fatty acid. The triglyceride gives the wax acid and ester functionality that can be measured by neutralization with KOH to yield a saponification (SAP) value.

It has been known to those skilled in the art that low molecular weight polymers such as synthetic ethylene acrylic acid copolymers having saponification values in excess of about 130 mgKOH/g to saponification values of about 150 mg/g KOH begin to have enough functionality and polarity to render them soluble in warm alkaline water.

In addition to the 98% triglyceride the palm and soy waxes can contain mono glycerol (up to about 2%) and trace amounts of sterols, metals, and other minor components.

When the waxes were analyzed for their fatty acid content using known methods of Gas Liquid Chromatography ("GLC"), the soybean wax was found to comprise between 82-94 % stearic acid (C_{18:0}) and between 3-14 % palmitic acid (C_{16:0}). By comparison, the palm oil wax comprises approximately 55 % stearic acid (C_{18:0}), 39.5 % palmitic acid (C_{16:0}), 1.1 % myristic acid (C_{14:0}) and approximately 1.0 % oleic acid (C_{18:1}).

In a preferred form, the water-resistance of the inventive gypsum board is such that it absorbs between approximately 5% to approximately 20% water, preferably between approximately 5% to approximately 15%, and most preferably between approximately 6% to approximately 7% water when tested in an immersion test.

### PREPARATION OF EXAMPLES

### Example 1. Effect of water based emulsion of triglyceride wax on the water resistance of gypsum.

For the purpose of illustrating the invention, standard grade gypsum samples (non water resistant) were taken from a 2.43 m x 1.22 m (8 ft by 4 ft) standard 12.7 mm (½ in.) thick gypsum board purchased at a commercial building supply store. The manufacturer of the board was United States Gypsum Corp, Chicago, IL. Samples were prepared by cutting 152.4 mm (6 in.) by 152.4 mm (6 in.) squares of gypsum from the center portion of the board and scraping the paper off each side of the board. Additionally, approximately 1.6 mm (1/16 in.) of gypsum directly adjacent to the paper facing was scraped off. The resulting gypsum was pulverized with a mallet and screened through a 12-mesh screen. The gypsum powder was placed in an open metal container and placed in a preheated oven at 276.80 degrees C (530 degrees F) for a period of one hour. The resulting anhydride gypsum was labeled 'calcium sulfate hemihydrate' used to prepare samples for evaluation.

An emulsion was prepared according to the following formulation and procedure:

Fifteen grams (15 g) of Marcus Oil & Chemical (Houston, TX) NAT 155 Wax (soy wax) was placed in a 400 ml Sorvall^{®} (Norwalk, Conn.) stainless steel chamber and melted on an electric hot plate until clear. To the molten wax was added 1 g of Polystepä F-5 nonylphenol ethoxylated (12 moles Ethylene Oxide) (Stepan Company Northfield, III.) and 1 g of a 30% KOH solution. The mix was kept molten and agitated for 30 min. Separately 50 g tap water was heated to boiling. The boiling water was added to the hot molten wax mixture and immediately inserted into a Sorvall^{®} Omni-mixer homogenizer equipped with a Sorvall^{®} model 17183 rotor-knife agitators. The mixer speed was set to 0.5.

After 1min 30 sec. the chamber was placed in cold tap water and allowed to cool while still under agitation. Following cooling to ambient temperature the resulting emulsion appeared fluid and opaque. This emulsion was designated Soy Wax Emulsion #4.

Six samples of gypsum were prepared using the above ingredients according to the following formulations:

**Table 1: Gypsum formulations**

| Sample No. | Calcium Sulfate Hemihydrate | Water | Soy Wax Emulsion #4 | Absorption Rate |
|---|---|---|---|---|
| 1 | 7.2 g | 9.8 g | 0.5 g | 6 seconds |
| 2 | 7.2 g | 9.8 g | 1.0 g | 15 seconds |
| 3 | 7.2 g | 9.8 g | 1.5 g | 36 seconds |
| 4 | 7.2 g | 9.8 g | 2.0 g | >60 seconds |
| 5 | 7.2 g | 9.8 g | 2.5 g | >60 seconds |
| 6 | 7.2 g | 9.8 g | 0 g | 4 seconds |

Each sample was well mixed manually with a glass rod until consistent. Sample material was placed into plastic cylinders (polvinylchloride, "PVC") with a nominal 38.1 mm (1½ in.) inner diameter and 12.7 mm (½ in.) height. The cylinders were placed atop a 6.35 mm (¼ in.) glass plate. Excess sample was discarded. The cylinders and glass plate were placed in an electric oven, preheated to 125.1 degrees C (257 degrees F), for one hour to allow for drying. Samples were removed from the oven an allowed to cool to room temperature.

The water resistance of the samples was evaluated by filling a glass tube with a nominal 1.6 mm (1/16 in.) internal diameter with water up to a mark of 25.4 mm (1 in.). This column of water was then placed on the sample surface (the samples being supported by a glass plate) and the time required to absorb the water was measured. The data for the rate of water absorption is shown in Table 1, which clearly shows the increased water resistance of gypsum produced by the incorporation of a vegetable derived wax compared to control samples containing no wax.

### Example 2. Effect of powdered vegetable wax on moisture resistance of gypsum.

A sample of Marcus Nat Wax 155 (Soy wax) was placed into a 400 ml Sorvall^{®} (Norwalk, Conn.) stainless steel chamber and ground: The ground wax was screened through a 75-mesh screen.

A sample of powdered paraffin wax (supplied by Moore and Munger Corp.) with a melting point of 59.4 degrees C (139 degrees F) was prepared using a razor and shaving thin films off the blocks of wax. The shavings were frozen and then pulverized to flakes averaging 1-3mm in diameter.

Calcined gypsum was weighed in a 50 ml glass flask and dry mixed with the indicated quantities of dry wax (see Table 2). Water was then added and mixed with a glass rod until a consistent smooth mix was obtained. The mixture was placed in round PVC cylinders with an inner diameter of 38.1 mm (1½ in.) and 12.7 mm (½ in.) height that had been placed atop a glass plate. The PVC cylinders were sprayed with a light coat of silicone release (Nappa) prior to placing the gypsum slurry into them.

The samples were then placed in an electrically heated temperature controlled lab oven for 1 hr at 93.34 degrees C (200 degrees F) to dry.

To test water absorption of the samples, the dry gypsum cylinders were removed from the PVC containers and weighed; the weighed gypsum samples were then immersed in 50.8 mm (2 in.) of room temperature tap water for 2 min. Immersion included placing the samples on a screen and placement into a water bath at room temperature. Samples were removed from the water bath, the samples were blotted using a paper towel to remove excess surface water and then reweighed; the amount of water absorbed was calculated as a percent of the original weight.

The table below (Table 2) indicates the sample formulations and results of water absorption tests, based on an average of two experiments.

**Table 2. Sample Formulation and Water Absorption**

| Sample No | Calcined Gypsum | Powdered Nat 155 Wax | Powdered 139F Paraffin Wax | Water Added to Powder | 2 Min. Water Absorption (%) |
|---|---|---|---|---|---|
| #1 | 15 gm | 0 | 0 | 10 gm | Sample disintegrated |
| #2 | 15 gm | 0.3 gm | 0 | 10 gm | 19% |
| #3 | 15 gm | 0.6 gm | 0 | 10 gm | 6.6% |
| #4 | 15 gm | 0.9 gm | 0 | 10 gm | 13.2% |
| #5 | 15 gm | 0 | 0.6 gm | 10 gm | 11.5 % |
| #6 | 15 gm | 0 | 0.9 gm | 10 gm | 8.1 % |
| #7 | 15 gm | 1.5 gm | 0 | 10 gm | 0.8% |
| #8 | 15 gm | 1.5 gm | 0 | 7.5 gm | 1.4% |
| #9 | 15 gm | 0 | 1.5 gm | 7.5 gm | 1.5% |

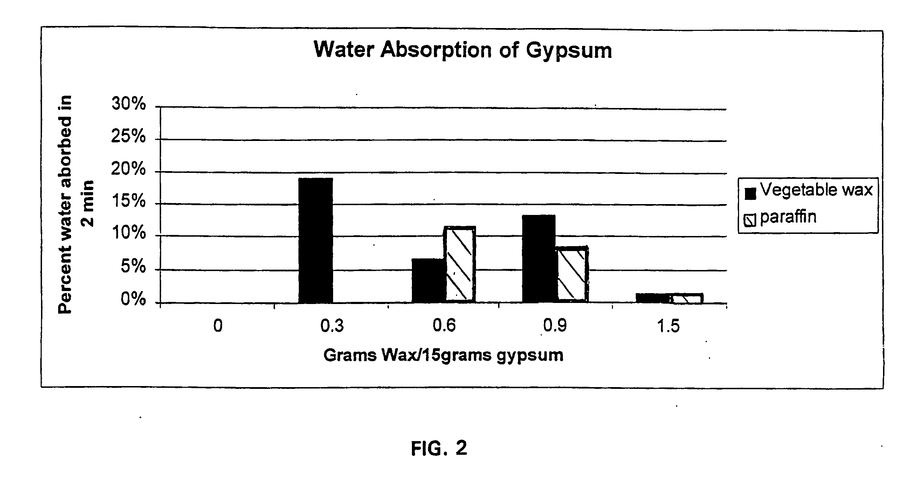

The results indicate that the water absorption rates for vegetable derived wax are comparable to that of paraffin wax (Table 2, Fig. 2). Commercially produced water resistant gypsum board can have typical paraffin wax addition rates of 3-5% based on the weight of the gypsum.

### Example 3. Effects of vegetable wax addition to gypsum: Strength testing.

To test the effect of adding vegetable derived wax to gypsum, gypsum samples were prepared using the formulations indicated in Table 3 (below). The gypsum slurries were then placed in an extruded aluminum channel to create 8mm x 8mm sticks of samples that were then placed in a locking vice, thus creating a cantilever bar. Force was applied to the cantilevered bar approximately 5mm in front of the cantilever point until the specimen failed. The amount of force, as measured in grams, was recorded at the point of failure.

Table 3 indicates that addition of vegetable-derived wax to gypsum does not have an adverse effect on the strength of gypsum.

**Table 3. Cantilevered Strength Testing**

| Sample No | Calcined Gypsum | Powdered Nat 155 Wax | Powdered 139F Paraffin Wax | Water Added to Powder | Force to Break Sample* |
|---|---|---|---|---|---|
| #1 | 7.5 gm | 0.75 gm | 0 | 4.0 gm | 670 gm |
| #2 | 7.5 gm | 0 | 0 | 4.0 gm | 540 gm |
| * Sample consists of 8mm square molded gypsum X 1 in. length held in cantilever fashion with force applied 5mm away from point of cantilever | | | | | |

### Example 4. Effects of vegetable-derived waxes on water resistance of paper products: Moisture vapor transmission rate ("MVTR")

Moisture transmission is an important property of wax-based coatings. MVTR indicates how rapidly moisture would penetrate the wax coating and degrade the properties of the substrate, such as a paper. It is desirable to have a low MVTR in cartons containing produce, where excessive moisture would cause spoilage of the fruits or vegetables. Poultry is often shipped in freezer boxes, which are generally wax coated corrugated boxes (kraft paper coated with wax) that are packed with poultry (or other food item) and then rapidly chilled, often by immersion in a ice/water bath. If the paper were not protected from the water, the strength of the box would degrade, making the use of these kinds of boxes impractical.

In this experiment MVTR was tested by a modified ASTM D3833 method. The modification required the use of clamps to assure adhesion of the linerboard to the aluminum cup. The results, summarized in Table 6, illustrate that while the coating weights were comparable, the soybean oil wax composition resulted in MVTR levels comparable to that of the control preparation (a petroleum based wax).

| **Table 4: Typical properties of Hydrogenated Soybean Oil** (Archer Daniels Midland (Decatur III.) designated by their product number 86-197- 0) | |
|---|---|
| **Property** | **Typical analysis** |
| Lovibond Red Color | 2.0 max |
| Saponification | 180 mgKOH/g |
| Viscosity | 10cP (60SUS) @ 99°C (210°F) |
| Hardness (needle penetration) | 2dmm @ 25°C (77°F) |
| %FFA Max. | 0.10 max |
| Flavor Min. | Characteristic |
| P.V. Mil eq/kg/max. | 1.0max |
| F.I. min | 8.0 min |
| Specific gravity (H2O = 1) | 0.92 |
| % Moisture max. | 0.05 max |
| I.V. by R.I. | 2.0 max |
| Iron (ppm) | 0.3 max |
| Soap (ppm) | 3.0 max. |
| Nickel (ppm) | 0.02 max |
| Copper (ppm) | 0.05 max. |
| Phosphorous (ppm) | 15.0 Max |
| Residual Citric Acid (ppm) | 15.0 max |
| Mettler Drop Point, C (F) | 68.4-71.2°C (155-160°F) |

| **Typical Fatty Acid Composition (by GLC)** | |
|---|---|
| C 14:0* | 3.0 max |
| C 16:0 | 3-14 |
| C 18:0 | 82-94 |
| C20:0 | 5 max |

| | |
|---|---|
| *number of carbon atoms:number of double bonds (e.g., 18:2 refers to linoleic acid; palmitic acid (16:0); stearic acid (18:0); oleic acid (18:1); arachidic acid (20:0); and behenic acid (22:0).) | |

| **Table 5: Typical properties of Hydrogenated Palm Oil** (Custom Shortenings & Oils (Richmond, Va) product Master Chef Stable Flake-P.) | |
|---|---|
| **Property** | **Typical analysis** |
| Lovibond Red Color | 4.0 max |
| %Free Fatty Acids Max. | 0.10 max |
| Flavor Min. | Bland |
| Iodine Value. by R.I. | 5.0 max |
| Mettler Drop Point, C (F) | 57.8-61.2°C (136-142°F) |
| Saponification | 185 mgKOH/g |
| Viscosity | 11.3 cP (65 SUS) @ 99°C (210°F) |
| Hardness (needle penetration) | 2-3 dmm @ 25°C (77°F) |

| **Typical Fatty Acid Composition (by GLC)** | |
|---|---|
| C8:0* | 0.3% max |
| C 10:0 | 0.3 max |
| C 12:0 | 0.5% max |
| C 14:0 | 1.1% max |
| C16:0 | 39.5% min |
| C18:0 | 53.0% min |
| C18:1 | 1.0% max |
| C 18:2 | 0.5% max |

| | |
|---|---|
| *number of carbon atoms:number of double bonds (e.g., 18:2 refers to linoleic acid) | |

**Table 6: MVTR Evaluation Of Vegetable Waxes and Petroleum Derived Wax (ASTM D3833)**

| **Wax Sample** | **Control, Citgo Blend-Kote 467** | **Marcus Palm Oil Wax** | **Marcus Nat 155 Soy Wax** |
|---|---|---|---|
| Sample Coating Weight kg/92.9 m² (Ib/1000sqft) | 2.6 (5.8) | 2.5 (5.6) | 2.6 (5.7) |
| MVTR Grams/645 cm² in 24 hours (Grams/100 sq inches in 24 hours) | 8.6 ± 0.9 | 14.5 ± 1.1 | 10.0 ± 0.4 |

## Claims

1. A composition to render a gypsum product water resistant, the composition comprising a hydrogenated vegetable wax, wherein the wax is **characterized by** having an iodine value ranging from 0 to about 30, a melting point ranging from 49 degrees C (120 degrees F) to about 85 degrees C (185 degrees F) (Mettler Drop Point), and wherein the wax is selected from the group consisting of soybean, corn, cottonseed, rape, canola, sunflower, palm, palm kernel, coconut, cranbe, linseed and peanut, the composition being added to the gypsum in a quantity sufficient to render the gypsum product water resistant, and wherein the gypsum product comprises from approximately 1 % wax to approximately 15 % wax.

2. The composition as described in claim 1, wherein the wax consists essentially of greater than approximately 90% triglycerides (by weight), and wherein the triglycerides comprise a fatty acid, the fatty acid having between approximately 8 to 22 carbon atoms.

3. The composition as described in claim 2, wherein the triglycerides comprise from approximately 50 % by weight to approximately 98 % by weight stearic acid.

4. The composition as described in claim 2, wherein the wax has an iodine value ranging from approximately 1 to approximately 10.

5. The composition as described in claim 4, wherein the wax has an iodine value ranging from approximately 2 to approximately 5.

6. The composition as described in claim 4, wherein the melting point ranges between approximately 63 degrees C (145 degrees F) to approximately 73.9 degrees C (165 degrees F).

7. The composition as described in claim 6, wherein the wax is soy wax, and the soy wax is added as either a wax solid, or as an aqueous emulsion.

8. A method to render a gypsum product water resistant, the method comprising the steps of:
forming an admixture comprising gypsum and water;
adding a hydrogenated vegetable wax to the gypsum admixture, the wax selected from the group consisting of soybean, corn, cottonseed, rape, canola, sunflower, palm, palm kernel, coconut, cranbe, linseed and peanut; the wax **characterized by** having an iodine value ranging from 0 to about 30, and a melting point ranging from approximately 49 degrees C (120 degrees F) to approximately 85 degrees C (185 degrees F) (Mettler Drop Point),
depositing the admixture between a pair of paper liners,
forming sheets of a gypsum product;
heating to a temperature between approximately 93 degrees C (200 degrees F) to approximately 149 degrees C (300 degrees F); and
allowing the deposited admixture to dry

9. The method as described in claim 8, wherein the wax is added to the gypsum admixture in the form of a wax solid.

10. The method as described in claim 9, wherein the gypsum product comprises from approximately 1 % wax to approximately 15 % wax.

11. The method as described in claim 10, wherein the gypsum product comprises from approximately 2 % wax to approximately 10 % wax.

12. The method as described in claim 11, wherein the gypsum product comprises approximately 3 % wax to approximately 6.5 % wax.

13. The method as described in claim 12, wherein the wax is soy wax.

14. The method as described in claims 8, 9, or 13, wherein the wax is added to the gypsum admixture in an emulsion.

15. The method as described in claim 14, wherein the gypsum product comprises from approximately 1 % wax emulsion to approximately 20 % wax emulsion.

16. The method as described in claim 15, wherein the gypsum product comprises from approximately 2 % wax emulsion to approximately 15 % wax emulsion.

17. The method as described in claim 16, wherein the gypsum product comprises approximately 8 % wax emulsion to approximately 13 % wax emulsion.

18. The method as described in claim 9 or 14, wherein the gypsum admixture is formed and set into a water resistant gypsum wallboard.

19. A water resistant gypsum wallboard having a core comprising a set composition produced by methods of claim 10 or claim 15.

20. The method as described in claim 8 or 14, further comprising the addition of one or more materials chosen from the group consisting of petroleum-derived waxes, paraffins, Fischer-Tropsch waxes, microcrystalline waxes, mineral-derived waxes, asphalt, polyvinyl alcohol, and hydrophobic agents.

## Patentansprüche

1. Eine Zusammensetzung, mit der die Wasserbeständigkeit eines Gipsprodukts erreicht wird; wobei diese Zusammensetzung aus einem hydrierten Pflanzenwachs besteht, das **dadurch gekennzeichnet ist, dass** es eine Jodzahl zwischen 0 und ungefähr 30, einen Schmelzpunkt zwischen 49 Grad C (120 Grad F) und ca. 85 Grad C (185 Grad F) (Tropfpunkt nach Mettler) besitzt und in der das Wachs aus einer Gruppe gewählt wird, zu der Sojabohnen, Mais, Baumwollsamen, Raps, Canola, Sonnenblumen, Palmen, Palmenkerne, Kokosnuss, Cranbe, Leinsamen und Erdnüsse gehören; die Zusammensetzung wird dabei dem Gips in einer Menge hinzugefügt, die ausreichend dafür ist, um das Gipsprodukt wasserbeständig zu machen, und in der das Gipsprodukt ca. 1% Wachs bis ca. 15% Wachs enthält.

2. Eine wie in Anspruch 1 beschriebene Zusammensetzung, in der das Wachs im Prinzip zu mehr als ungefähr 90 Gew.-% aus Triglyceriden besteht, und in der die Triglyceride aus einer Fettsäure bestehen, wobei die Fettsäure ungefähr 8 bis 22 Kohlenstoffatome besitzt.

3. Eine wie in Anspruch 2 beschriebene Zusammensetzung, in der die Triglyceride zu zwischen ungefähr 50 Gew.-% bis 98 Gew.-% aus Stearinsäure bestehen.

4. Eine wie in Anspruch 2 beschriebene Zusammensetzung, in der das Wachs eine Jodzahl von ca. 1 bis ca. 10 hat.

5. Eine wie in Anspruch 1 beschriebene Zusammensetzung, in der das Wachs eine Jodzahl von ca. 2 bis ca. 5 hat.

6. Eine wie in Anspruch 4 beschriebene Zusammensetzung, bei der der Schmelzpunkt zwischen ca. 63 Grad C (145 Grad F) und ungefähr 73,9 Grad C (165 Grad F) liegt.

7. Eine wie in Anspruch 6 beschriebene Zusammensetzung, in der das Wachs Sojawachs ist, und in der das Sojawachs entweder als Wachs in fester Form oder als wässrige Emulsion hinzugefügt wird.

8. Eine Methode, mit der ein Gipsprodukt wasserbeständig gemacht wird, die aus folgenden Schritten besteht:
Bildung einer Beigabe aus Gips und Wasser;
Zufügung eines hydrierten Pflanzenwachses zu der Gips-Beigabe, wobei das Wachs aus einer Gruppe gewählt wird, zu der Sojabohnen, Mais, Baumwollsamen, Raps, Canola, Sonnenblumen, Palmen, Palmenkerne, Kokosnuss, Cranbe, Leinsamen und Erdnüsse gehören; wobei das Wachs sich **dadurch** auszeichnet, dass es eine Jodzahl zwischen 0 und ca. 30 und einen Schmelzpunkt zwischen ca. 49 Grad C (120 Grad F) und ca. 85 Grad C (185 Grad F) besitzt (Tropfpunkt nach Mettler),
die Beigabe zwischen ein Paar Papierschichten gelegt wird,
die Platten eines Gipsprodukts bilden;
Erhitzen auf eine Temperatur zwischen ca. 93 Grad C (200 Grad F) bis ca. 149 Grad C (300 Grad F) und
Trocknen lassen der aufgelegten Beigabe

9. Eine wie in Anspruch 8 beschriebene Methode, in der das Wachs der Gipsbeigabe in Form eines festen Wachses beigegeben wird.

10. Eine wie in Anspruch 9 beschriebene Methode, in der das Gipsprodukt ca. 1% Wachs bis ca. 15% Wachs enthält.

11. Eine wie in Anspruch 10 beschriebene Methode, in der das Gipsprodukt ca. 2% Wachs bis ca. 10% Wachs enthält.

12. Eine wie in Anspruch 11 beschriebene Methode, in der das Gipsprodukt ca. 3% Wachs bis ca. 6,5% Wachs enthält.

13. Eine wie in Anspruch 12 beschriebene Methode, in der das Wachs Sojawachs ist.

14. Eine wie in Anspruch 8, 9 bzw. 13 beschriebene Methode, in der das Wachs der Gips-Beigabe in einer Emulsion beigefügt wird.

15. Eine wie in Anspruch 14 beschriebene Methode, in der das Gipsprodukt ca. 1% Wachsemulsion bis ca. 20% Wachsemulsion enthält.

16. Eine wie in Anspruch 15 beschriebene Methode, in der das Gipsprodukt ca. 2% Wachsemulsion bis ca. 15% Wachsemulsion enthält.

17. Eine wie in Anspruch 16 beschriebene Methode, in der das Gipsprodukt ca. 8% Wachsemulsion bis ca. 13% Wachsemulsion enthält.

18. Eine wie in Anspruch 9 bzw. 14 beschriebene Methode, in der die Gips-Beigabe gebildet und in eine wasserbeständige Gipskartonplatte gelegt wird.

19. Eine wasserbeständige Gipskartonplatte mit einem Kern, der eine festgelegte Zusammensetzung hat, die durch in Anspruch 10 bzw. Anspruch 15 beschriebene Verfahren hergestellt wird.

20. Eine wie in Anspruch 8 bzw. 14 beschriebene Methode, zu der des Weiteren die Hinzufügung von einem oder mehr Materialien gehört, die aus der Gruppe gewählt werden, die durch aus Erdöl abgeleiteten Wachse, Paraffine, Fischer-Tropsch-Wachse, mikrokristalline Wachse, von Mineralien abgeleitete Wachse, Bitumen, Polyvinylalkohol und hydrophobe Agentien gebildet wird.

## Revendications

1. Une composition pour rendre un produit à base de gypse résistant à l'eau, la composition contenant une cire végétale hydrogénée, où la cire est **caractérisée** pour avoir un indice d'iode allant de 0 à 30 environ, un point de fusion se situant entre 48°C (120°F) et 85°C (185°F) (Point de goutte Mettler), et où la cire est sélectionnée du groupe composé d'huile de graines de soja, maïs, graines de coton, grosse navette, colza, tournesol, palme, palmier, coco, crambe, lin et cacahuète : la composition étant ajoutée au gypse en quantité suffisante pour rendre le produit à base gypse résistant à l'eau et où le produit à base de gypse est constitué de 1% à environ 15% de cire.

2. La composition, telle que celle décrite dans l'affirmation 1 où la cire consiste essentiellement en plus de 90% de triglycérides (par poids) et où les triglycérides renferment un acide gras, acide gras ayant entre 8 à 22 atomes de carbone.

3. La composition, telle que celle décrite dans l'affirmation 2, où les triglycérides contiennent environ de 50% à 98% par poids d'acide stéarique.

4. La composition, telle que celle décrite dans l'affirmation 2, où la cire a un indice d'iode allant de 1 à 10 environ.

5. La composition, telle que celle décrite dans l'affirmation 4, où la cire a un indice d'iode allant de 2 à 5 environ.

6. La composition, telle que celle décrite dans l'affirmation 4, où le point de fusion se situe entre 63°C (145°F) et 73,9°C (165°F) environ.

7. La composition, telle que celle décrite dans l'affirmation 6, où la cire est de la cire de soja, et la cire de soja, est soit ajoutée en tant que cire solide ou en tant que émulsion aqueuse.

8. Une méthode pour rendre un produit à base de gypse résistant à l'eau. Cette méthode comprend les étapes suivantes :
- former un mélange gypse et eau,
- ajouter une cire végétale hydrogénée au mélange à base de gypse : la cire sélectionnée du groupe composé d'huile de graines de soja, maïs, graines de coton, grosse navette, colza, tournesol, palme, palmier, coco, crambe, lin et cacahuète, la cire **caractérisée en** ayant un indice d'iode compris entre 0 et 30, et un point de fusion se situant entre 49°C (120°F) et 85°C (185°F) environ, (Point de goutte Mettler),
- déposer le mélange entre deux couches de papier doublure,
- former des feuilles de produit à base de gypse,
- chauffer à une température comprise entre 93°C (200°F) et 149°C (300°F), et
- permettre au mélange obtenu déposé de sécher.

9. La méthode, telle que celle décrite dans l'affirmation 8, où la cire est ajoutée au mélange à base de gypse sous la forme de cire solide.

10. La méthode, telle que celle décrite dans l'affirmation 9, où le produit à base de gypse comprend environ 1 à 15% de cire.

11. La méthode, telle que celle décrite dans l'affirmation 10, où le produit à base de gypse comprend environ 2 à 10% de cire.

12. La méthode, telle que celle décrite dans l'affirmation 11, où le produit à base de gypse comprend environ 3 à 6,5% de cire.

13. La méthode, telle que celle décrite dans l'affirmation 12, où la cire est une cire à base de soja.

14. La méthode, telle que celle décrite dans les affirmations 8, 9 ou 13, où la cire est ajoutée au mélange à base de gypse est une émulsion.

15. La méthode, telle que celle décrite dans l'affirmation 14, où le produit à base de gypse comprend environ 1 à 20% d'émulsion de cire.

16. La méthode, telle que celle décrite dans l'affirmation 15, où le produit à base de gypse comprend environ 2 à 15% d'émulsion de cire.

17. La méthode, telle que celle décrite dans l'affirmation 16, où le produit à base de gypse comprend environ 8 à 13% d'émulsion de cire.

18. La méthode, telle que celle décrite dans les affirmations 9 ou 14, où le mélange à base de gypse est formé et inséré dans le panneau de revêtement à base de gypse résistant à l'eau.

19. Un panneau de revêtement à base de gypse résistant à l'eau ayant un noyau comprenant une composition définie produite par les méthodes des affirmations 10 ou 15.

20. La méthode, telle que celle décrite dans les affirmations 8 ou 14, comprenant de plus l'addition d'un ou plusieurs matériaux choisis du groupe qui consistent en des cires dérivées du pétrole, des paraffines, des cires Fisher-Tropsch, des cires microcristallines, des cires d'origine minérale, de l'asphalte, des alcools polyvinyliques et des agents hydrophobes.
